(19) **Europäisches Patentamt**
**European Patent Office**
**Office européen des brevets**

(11) **EP 2 961 176 B1**

(12) **EUROPEAN PATENT SPECIFICATION**

(45) Date of publication and mention
of the grant of the patent:
**11.01.2017 Bulletin 2017/02**

(51) Int Cl.:
***H04N 21/4385*** *(2011.01)*

(21) Application number: **14173422.8**

(22) Date of filing: **23.06.2014**

(54) **Correcting errors in a digital media transport stream**

Fehlerkorrektur in einem digitalen Medientransportstrom

Correction d'erreurs dans un flux de transport multimédia numérique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.12.2015 Bulletin 2015/53**

(73) Proprietor: **Harman Becker Automotive Systems
GmbH
76307 Karlsbad (DE)**

(72) Inventors:
• **Iqbal, Muhammad Imran
37234 Ronneby (SE)**
• **Zepernick, Hans-Jürgen
37140 Karlskrona (SE)**
• **Khatibi, Siamak
38632 Färjestaden (SE)**

(74) Representative: **Bertsch, Florian Oliver
Kraus & Weisert
Patentanwälte PartGmbB
Thomas-Wimmer-Ring 15
80539 München (DE)**

(56) References cited:
**US-A- 4 748 619**

• SCHMIDT FLORIAN ET AL: "A heuristic header
error recovery scheme for RTP", 2013 10TH
ANNUAL CONFERENCE ON WIRELESS
ON-DEMAND NETWORK SYSTEMS AND
SERVICES (WONS), IEEE, 18 March 2013
(2013-03-18), pages 186-190, XP032476924, DOI:
10.1109/WONS.2013.6578345 ISBN:
978-1-4799-0747-2 [retrieved on 2013-08-12]
• XAVI ARTIGAS ET AL: "The DISCOVER Codec:
Architecture, Techniques And Evaluation
(Abstract)", 26. PICTURE CODING
SYMPOSIUM;7-11-2007 - 9-11-2007; LISBON,, 7
November 2007 (2007-11-07), XP030080480,

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a method for correcting errors in a digital media transport stream, especially digital media transport streams of digital multimedia broadcasting and digital video broadcasting signals. The present invention furthermore relates to a correction device and an electronic device implementing the method.

Background

Digital broadcasting systems, for example digital multimedia broadcasting (DMB) and digital video broadcasting (DVB) systems, have become part of our daily life. They provide information and entertainment at home, during travelling by car, train or ship, or during walking around. In digital broadcasting systems the video streams and audio streams have to pass through a radio frequency channel from a sender to a receiver. However, radio frequency signals may be disturbed by environmental influences and may have a varying quality due to a transmission distance and a transmission environment. A disturbed radio frequency channel may inflict errors to the video and audio streams. As a result, the quality of service associated to these broadcasting systems may be degraded. Especially reception quality may be poor due to, for example bad weather and poor or no coverage in certain places, for example in tunnels. Therefore, to maintain the quality of these services, a forward error correction (FEC) is provided and is essential for such systems. However, FEC requires additional data to be transmitted from the sender to the receiver, which in turn reduces the bandwidth for the actual services. Furthermore, the error correction capabilities for an error control code used for FEC depends on the amount of additional data (for example parity data) available for the FEC. As bandwidth is limited, this additional data must also be very limited which limits the error correction capabilities of the used FEC technique. As a result, in times of bad reception, the quality of audio and video streams of a multimedia broadcasting system may be degraded.

In this context, US 4,748,619 discloses a device for use in demultiplexing a MAC/PACKET incoming signal which comprises successive bursts of digital data distributed into packets. Each packet consists of useful data and a header having a channel number indicating one of a plurality of service components to which the packet is assigned, a continuity index, and a header error protection code. The device has a circuit for generating all error-free configurations of a selected channel number and continuity index and corresponding to a respective service component. An encoder encodes all error-free configurations into all possible theoretical header configurations having the error-protection code. A Hamming distance between each packet header in the incoming signal and all theoretical header configurations is computed. Packets for which the Hamming distance is not greater than a predetermined value are directed to an output interface.

The publication "A heuristic header error recovery scheme for RTP" (Schmidt, Florian et al, 2013, 10th ANNUAL CONFERENCE ON WIRELESS ON-DEMAND NETWORK SYSTEMS AND SERVICES (WONS), IEEE, 18 March 2013 (2013-03-18)) discloses a heuristic header error recovery scheme for a Real time Transport Protocol (RTP). The scheme accepts erroneous packets, even if the errors are within the header area, and heuristically repairs these errors to identify the correct data stream the packets belong to. By looking at the header values expected for the next packet in each stream, it is identified which stream a packet belongs to. The header contents are repaired to those expected ones.

The publication "The DISCOVER Codec: Architecture, Techniques And Evaluation" (XAVI Artigas et al, 26. PICTURE CODING SYMPOSIUM; 7-11-2007-9-11-2007; LISBON, 7 November 2007, XP030080480) describes a Codec Architecture and associated tools adopted by DISCOVER (Distributed Coding for Video Services), a European project, which has been devoted to the advancement of distributed video coding.

Therefore, there is a need for an improved error correction for digital broadcasting systems.

Summary

According to the present invention, this objective is achieved by a method for correcting errors in a digital media transport stream as defined in claim 1, a correction device as defined in claim 10 and an electronic device as defined in claim 12. The dependent claims define preferred and advantageous embodiments of the invention.

According to the present invention, a method for correcting errors in a digital media transport stream is provided. The digital media transport stream may comprise, for example, a transport stream of a digital multimedia broadcasting (DMB) or a digital video broadcasting (DVB) system. The digital media transport stream comprises a stream of digital data packets. Each digital data packet comprises at least one header data field and payload data which uniquely identify the packet type of the corresponding digital data packet. Especially, as will be described below, the header data field may comprise a plurality of information blocks with some of the information blocks uniquely identifying the packet type of the corresponding digital data packet. In other words, a subset of the header data fields may uniquely identify the packet type. Furthermore, as will be described below, additionally the payload data may comprise information blocks which may contribute to identify the packet type. The packet type is one of a plurality of packet types which are predefined for the digital media transport stream. The packet types may comprise, for example, a video data packet, an audio data packet, a program association table (PAT) packet, a program map table (PMT) packet, a scene description (SD) packet, an object description (OD) packet or a Null packet. According to the method, a plurality of header masks is retrieved by a program code of a software running on the system with the help of the characteristics of the digital media stream. As an alternative or additionally, the header masks may be retrieved from an already stored place in a storage device. As an alternative, the header masks may be created by a program code of a software running on the system or may be hard coded in the software of the system. Each header mask is associated with a corresponding packet type of the plurality of packet types. Each header mask identifies those header data fields which uniquely identify the associated packet type. The header mask may comprise, for example, for each header data field an indicator indicating if this header data field may be used for uniquely identifying the packet type or not. In case the header data field is suitable for identifying the packet type, a corresponding expected value or value range for this header data field is provided in the header mask. According to the method, a digital data packet of the digital media transport stream is received and for each header mask of the plurality of header masks the header data fields of the received digital data packet are compared with the header data fields of the header mask. Based on the comparison with the plurality of header masks, the packet type of the received digital data packet is determined. Based on the determined packet type, the received digital data packet is corrected.

The above-described method may be combined with a traditional forward error correction (FEC). Especially, the above-described method may be performed after the transport stream has been corrected by the FEC. In this case, the above-described method may improve the quality of the digital media transport stream by correcting errors in the digital media transport stream packets, in particular when the FEC fails to correct these errors. The above-described method may be performed at the receiver side only and does therefore not put any demands on the sender or broadcaster sending the digital media transport stream. Furthermore, the above-described method does not need any additional data, for example parity data, which has to be transmitted together with the transport stream and therefore, the above-described method does not demand any additional transmission bandwidth. The above-described method may additionally comprise the step of receiving the digital data packets of the digital media transport stream wirelessly via, for example, a radio frequency channel. However, the above-described method is not restricted to transport streams transmitted via radio frequency channels, but may also be used in connection with transport streams which are transmitted via an electrical or optical connection or wirelessly via infrared. The method may furthermore comprise processing the corrected digital data packets, for example for extracting video and audio data, and the method may furthermore comprise displaying or outputting the extracted video and audio data. Furthermore, the method may comprise processing the corrected digital data packets and outputting the corrected digital data packets to a device which outputs the content of the digital data packets to a user or which forwards the digital data packets or the content of the digital data packets to another device.

According to an embodiment, correcting the received digital data packet comprises the following steps. A header error rate of the received digital data packet is estimated based on the determined packet type. The header error rate may comprise. for example. a number of erroneous bits or a percentage of erroneous bits. The header error rate is compared to a packet-type specific header error rate threshold. The header error rate threshold is predetermined for each packet type of the plurality of packet types. The received digital data packet is selectively corrected based on the comparison of the estimated header error rate with the predetermined header error rate threshold. For example, the received digital data packet may be corrected only, if the estimated header error rate does not exceed the predetermined header error rate threshold.

A further processing of the received digital data packets may be very sensitive to errors and may cause a decoder, for example a video or audio decoder, to crash. Hence, correction of digital data packet has to be performed carefully. Therefore, the following header error rate threshold may be recommended for the different packet types. For video data packets, the header error rate threshold may be in the range from zero to three bit errors and for audio packets the header error rate threshold may in a value range from zero to four bit errors. For other packet types, for example a program association table packet, a program map table packet, a scene description packet, an object description packet or a Null packet, the header error rate threshold may be set to a value of zero. For video data packets and audio data packets, a higher threshold means more repair, but it also may result in a higher risk of a decoder or player crashing due to an erroneous correction. Therefore, a trade of between the amount of repair and the risk of decoder crashing is to be considered. The header error rate thresholds of the packet types PAT, PMT, and OD may be set to zero as these packets are extremely sensitive to errors. Even a single bit error may potentially cause a decoder to crash. Furthermore, these packets appear at least twice every second in a typical digital media broadcasting transport stream and the decoder only needs to decode one set of these packets to decode the entire subsequent digital media stream. The header error rate threshold of a scene description (SD) packet may be set to zero such that SD packets having an erroneous header may not be corrected as it has been observed from a large number of digital media broadcasting videos that these packets have no effect on video quality. Null packets may be ignored as these packets contain no information or data.

It has to be noticed that the above-described header error rate thresholds relate only to errors in the header data field of the digital data packets. With the above-proposed header error rate thresholds, video and audio data packets may be corrected even if already the header data fields comprise errors. The correction in general may relate to a correction of header data fields and/or a correction of the payload data. Digital data packets of the other packet types (PAT, PMT, SD, OD or Null) are corrected only if no errors have been detected in the header data fields. Therefore, in these packet types the correction relates only to the payload data. The correction of payload data will be described in other embodiments below.

Comparing the header data fields of the received digital data packet with the header data fields of the header mask comprises for each header mask a determination of a Hamming distance between the header data fields of the received digital data packet and header data fields of the header mask. As a result, for each packet type, a corresponding Hamming distance is determined. The Hamming distance is the number of positions at which the header data fields of the received data packet and the header data fields of the header mask is different. The larger the Hamming distance, the lower is the probability that the received digital data packet is of the packet type of the corresponding header mask. If the Hamming distance is zero, there is no difference between the header data fields of the received digital data packet and the header data fields of the corresponding header mask. Therefore, the Hamming distance gives an indication by single number indicating the probability that the received digital data packet is a digital data packet of a specific packet type. Based on the Hamming distance the packet type of the received digital data packet can be easily determined.

The packet type of the received data packet is determined based on the Hamming distance in the following way. In case the Hamming distance between the header data fields of received data packet and the header data fields of one of the header masks is zero, the packet type of the one header mask which resulted in the zero Hamming distance is determined as packet type of the received digital data packet. In case the determined Hamming distance between the header data fields of the received digital data packet and the header data fields of none of the header masks is zero, a predefined number of packet types associated with those header masks having the smallest Hamming distance with respect to the received digital data packet is determined. In other words, a predefined number of packet types for which the lowest Hamming distances have been determined, are determined and will be considered only. For example, if the predefined number is three, then the three packet types for which the lowest Hamming distances have been determined, will be considered.

For example, for the packet type "video data packet" a Hamming distance of one has been determined, for the packet type "program association table packet" a Hamming distance of one has been determined, and for the packet type "scene description packet" a Hamming distance of two has been determined, and for all other packet types a Hamming distance of three or more has been determined. Therefore, only the video data packet type, the program association table packet type and the scene description packet type will be considered as will be described in the following. For each of the predefined number of packet types which have been determined based on the Hamming distances, a corresponding confidence factor is determined. The confidence factor is determined based on a comparison of additional data of the received digital data packet and expected additional data which is predefined for the corresponding packet type. The additional data comprises predefined parts of the payload data which may be arranged subsequently to the header data fields. The expected additional data is predefined specifically for each packet type. The packet type with the highest confidence factor is determined as the packet type of the received digital data packet. The confidence factor may additionally include the Hamming distance described above. In other words, the packet type of the received digital data packet is determined by analyzing not only the header data fields, but also parts of the payload data which have a fixed structure or fixed values or predefined value ranges. Thus, a packet type of the received digital data packet can be determined reliably and with a high confidence.

According to another embodiment, the received digital data packet is corrected additionally based on the additional data and the expected additional data described above. In detail, the additional data of the received digital data packet is determined, wherein the additional data comprises predefined parts of the payload data subsequent to the header data fields. Furthermore, expected additional data is retrieved from, for example the error-free packets of the same digital media stream or from a storage device. As described above, the expected additional data is predefined specifically for each packet type. Based on the additional data and the expected additional data, the payload data is corrected. For example, the additional data and the expected additional data may be compared and bits or data structures having a fixed value may be adapted in the payload data of the received digital data packet if there is a difference to expected values defined in the expected additional data. Thus, based on the previously determined packet type, the payload data may be corrected in view of the determined packet type.

For example, in case of a received video data packet, the additional data may comprise a packet start code prefix indicating the start of a next packetized elementary stream packet. The packet start code prefix may comprise a fixed value. Furthermore, the additional data may comprise a video stream identifier which may also comprise a fixed value at a fixed position within the payload data. Furthermore, the additional data may comprise an adaption field presence flag, a payload start indicator flag and flags of an adaption field. Depending on a start or end of a packetized elementary stream packets, only certain combinations of the above-mentioned flags are possible. Therefore, depending on a comparison of the possible flags with the actually received flags of the received digital data packet, the confidence factor may be determined or the received payload data may be corrected. Additionally, any other characteristic of the video data packets of the underlying media stream that may be useful for correcting errors may be used as the additional data.

In case the received digital data packet comprises an audio data packet, the additional data may comprise, for example, a packet start code prefix, a fixed audio stream identifier, an adaption field presence flag, a packetized elementary stream header length and/or a packetized elementary stream packet length. The header length and the packet length may have restrictions in their value ranges and in relation to one another. Fulfillment of these restriction in the received digital data packet may be used to determine the confidence factor or to correct the payload data. Additionally, any other characteristic of the audio data packets of the underlying media stream that may be useful for correcting errors may be used as the additional data.

For a received program association table packet, the additional data comprises, for example, a payload unit start indicator, adaption field control bits, an adaption field length, a section length, a section number, a last section number, bytes in the packet after the section length information, a cyclic redundancy check information, and a table identifier. Required relations between the length and number data may advantageously used for determining the confidence factor and for correcting the program association table packet. Additionally, any other characteristic of the program association table packets of the underlying media stream that may be useful for correcting errors may be used as the additional data.

For a received program map table packet, the additional data comprises, for example, the payload unit start indicator, adaption field control bits, an adaption field length, a section length, a section number, a last section number, bytes in the packet after the section length information, a cyclic redundancy check information, a table identifier, a two-byte information following the last section number relating to the program information length. It also contains the PID of the packet that contains the program clock reference (PCR). In DMB usually, PCR is kept in audio packets but it may be different for different streams. Additionally, any other characteristic of the program map table packets of the underlying media stream that may be useful for correcting errors may be used as the additional data.

For a received object description packet, the additional data may comprise, for example, a payload unit start indicator, adaption field control bits, an adaption field length, a table identifier, a section length, a section number, a last section number, bytes in the packet after the section length information and/or a cyclic redundancy check information. Additionally, any other characteristic of the object description packets of the underlying media stream that may be useful for correcting errors may be used as the additional data.

The additional data for a received scene description packet may comprise, for example, a payload unit start indicator, adaption field control bits, an adaption field length, a table identifier, a section length, a section number, a last section number, bytes in the packet after the section length information and/or a cyclic redundancy check information. Finally, for a received Null packet, the additional data may comprise for example a payload unit start indicator having a fixed value, and the condition that the adaption field is never present and all payload bytes have a fixed value. Additionally, any other characteristic of the scene description packets of the underlying media stream that may be useful for correcting errors may be used as the additional data.

In addition to setting header error thresholds and deciding whether to repair or not to repair a particular type of digital data packet, the above-listed large number of additional data providing fixed or structural information of the different types of digital data packets may be taken into account. The specific characteristics of these packet types may assist in correcting certain errors. Some of the additional data may be fixed while others may be variable, but constrained to certain value ranges or constrained to certain conditions or interdependent among different field values.

According to the present invention, a correction device for correcting errors in a digital media transport stream is provided. The digital media transport stream comprises a stream of digital data packets. Each digital data packet of the stream of digital data packets comprises at least one header data field and payload data uniquely identifying a packet type of the corresponding digital data packet. The packet type is one of a plurality of packet types which are predefined for the digital media transport stream. The correction device comprises a processing unit which is configured to receive a digital data packet of the digital media transport stream and to retrieve a plurality of header masks from a storage device or from the error-free packets of the live broadcasted stream. Each header mask is associated with a corresponding packet type of the plurality of packet types and each header mask identifies the header data fields for uniquely identifying the associated packet type. The processing unit is furthermore configured to compare for each header mask of the plurality of header masks the header data fields of the received digital data packet with the header fields of the header mask. Based on the comparison with the plurality of header masks, the packet type of the received digital data packet is determined and the received digital data packet is corrected based on the determined packet type.

The correction devices may be configured to perform the above-described methods and therefore also provides the above-described advantages.

According to the present invention, an electronic device, for example a terminal device or a user equipment, is provided. The electronic device comprises a receiver device for receiving digital data packets of a digital media transport stream, and a correction device as defined above. The receiver device may also include channel decoding using, for example, a Read-Solomon decoder. The correction device is coupled to the receiver device for receiving the digital data packets from the receiver device. The electronic device furthermore comprises an output device coupled to the correction device for receiving the corrected digital data packets from the correction device and for outputting the corrected data packets. The electronic device may comprise, for example, a digital broadcast television receiver, a mobile telephone, a mobile media player or a television set.

Although specific features described in the above summary and the following detailed description as described in connection with specific embodiments and aspects of the present invention, it should be noted that the features of the embodiments and aspects described herein may be combined with each other unless specifically noted otherwise.

Brief description of the Drawings

The present invention will now be described with reference to the accompanying drawings.

Fig. 1 shows schematically an electronic device according to an embodiment of the present invention.

Fig. 2 shows a method according to an embodiment of the present invention.

Detailed description

Due to broadcasting nature of digital multimedia broadcasting television (DMB TV) and similar services, the associated video and audio streams are exposed to an error prone wireless channel. The wireless channel introduces errors into these streams. This may in particular raise a problem in bad reception conditions, for example in street canyons or rural areas far away from the next transmitter. These errors degrade the quality of service, in particular the audio and video quality. Furthermore, these errors may also cause a decoder, for example a video or audio decoder, to crash such that the user may have to restart the decoder resulting in a degraded quality of usability.

Therefore, multimedia systems are usually equipped with a forward error correction (FEC) to correct the channel errors. In particular, in DMB systems, this may be achieved with the aid of Reed-Solomon (RS) codes, for example (204, 188) RS. However, the error correction capability of this code is rather limited, for example the above code can correct up to eight byte errors from a packet of 204 bytes. As a result, these codes are ineffective in keeping a good quality of service if the number of errors in the packets is higher than the error correction capabilities.

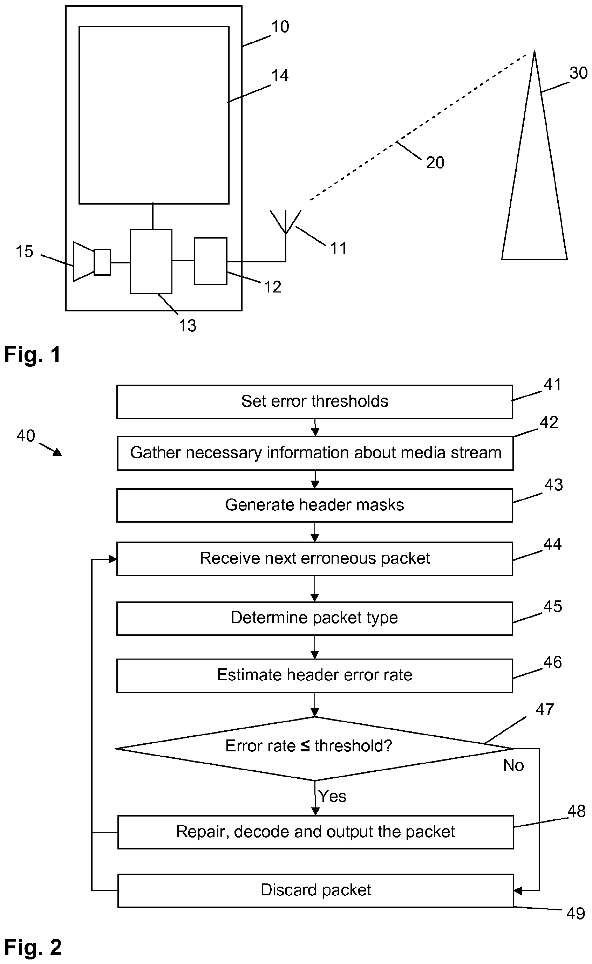

Fig. 1 shows an electronic device 10, for example a mobile telephone or a television set for a vehicle, receiving a digital media stream via a wireless channel 20 from a sender 30. The electronic device 10 comprises an antenna 11 and a receiver device 12 for receiving and channel decoding the digital multimedia stream, and a decoding and correction device 13 coupled to the receiver device 12. The decoding and correction device 13 may be configured to perform the above-described forward error correction as well as a decoding of the received digital multimedia stream for outputting video and audio data to output devices 14, 15 of the electronic device 10, for example to a display 14, and a loudspeaker 15. Furthermore, the decoding and correction device 13 may be configured to perform a correction method which will be described in more detail in the following in connection with Fig. 2.

Fig. 2 shows a method 40 for receiving and processing a digital media transport stream. The method 40 comprises method steps 41 to 49. The digital media transport stream (TS) comprises a stream of digital data packets and each digital data packet of the stream comprises at least one header data field and payload data. The header data field uniquely identifies a packet type of the corresponding digital data packet. The packet type is one of a plurality of packet types which are predefined for the digital media transport stream. For example, the digital media transport stream may comprise video data packets, audio data packets, program association table (PAT) packets, program map table (PMT) packets, scene description (SD) packets, object description (OD) packets, and Null packets. In step 41 for each packet type an individual error threshold is set. As will be described below, these error thresholds will be used to avoid running the packet correction algorithm when too many errors are observed, which could cause the algorithm to fail improving quality, but may cause worse results. Once these error thresholds have been set, information about the digital media broadcasting transport stream is gathered for the different types of packets. Apart from general information about the digital media broadcasting transport stream, also a number of packet-type specific information will be taken into account as will be described below. In step 42, digital media transport stream information is gathered. This information will be later useful in error correction. This information may be obtained from the underlying stream by means of error-free packets or it may be obtained from a storage device. Then, in step 43, header masks for the different types of packets are generated using the stream related information gathered in step 42or retrieved from a storage device, and for each erroneous packet of the digital media broadcasting transport stream which is received in step 44, a packet type is determined in step 45. In order to utilize the error threshold, in step 46, a header error rate is estimated. The result of this estimate is then used in step 47 to decide on repairing the underlying erroneous packet. Finally, if the decision is to go ahead with the correction, the packet is repaired in step 48. If the packet is repaired it is furthermore decoded and output in step 48. However, if it is not repaired because of high error rate, it is just discarded in step 49. Then, the method 40 continues in step 44 with the next erroneous packet of the digital media broadcasting stream.

In the following, steps 41 to 49 will be described in more detail.

In step 41, the error thresholds are set. The error thresholds define the maximum amount of errors in a packet that the algorithm should attempt to correct. A suitable range for the error thresholds may be 0 to 25. Individual thresholds may be set for each type of packet depending on the error sensitivity of that packet type and the error correction gain. The higher the error sensitivity of a packet type, the lower the threshold for this packet type may be set. A higher threshold means more repair, but it also means a higher risk of a decoder/player crashing. Therefore, a good trade-off between the amount of repair and the risk of the decoder crashing is to be considered. As the error sensitivity level of the audio and video packets is medium to high, the corresponding error thresholds may be set, depending on error rate, in a range of zero to three for video packets and in a range of zero to four for audio packets. The error threshold for PAT, PMT and OD packets may be set to zero. These packets are extremely sensitive to errors and even a single residual bit error may potentially cause the decoder to crash. Furthermore, these packets appear at least twice every second and the decoder only needs to decode one set of these packets. As such, the decoder can simply ignore these packets after that set. This will also save processing resources. The error threshold for SD packets may also be set to zero, as it has been observed that these packets have no effect on video quality. Finally, Null packets may be ignored as these packets contain no information or data, and therefore the error threshold may also be set to zero.

In step 42, the digital media stream information is gathered. There are two ways it can be achieved. Either it is retrieved from a storage device or it is obtained from viewing error-free packets of the live stream. The stream information may relate, for example, to general information like packet IDs (PIDs) of the associated packets, a transport priority, a scrambling control, an adaption field control type, and continuity counters of previous packets of all types. Furthermore, the stream information may comprise packet-specific information, for example for video packets a stream type and an adaption field presence type, and for audio packets a stream type and PCR reserve bit values (all zero or all one) etc.

In step 43, header masks are generated. The header masks may be based on the obtained digital media stream information. As an alternative, the header masks may be retrieved from a storage device of the electronic device 10 or may be hard code in a software of the correction device 13 or may be obtained from the stream information gathered in step 42. For creating the packet header masks all the known bits of a header type are set. Each type of packet associated to a program has its own mask. The following table shows a typical example header masks for PMT, PAT, audio and video packets. All the known bits of the header are indicated by a zero or one. The unknown bits are indicated by an "x".

| PMT | PAT | Audio | Video | Bit Position | |
|---|---|---|---|---|---|
| 0 | 0 | 0 | 0 | 1 | |
| 1 | 1 | 1 | 1 | 2 | |
| 0 | 0 | 0 | 0 | 3 | |
| 0 | 0 | 0 | 0 | 4 | Sync Byte |
| 0 | 0 | 0 | 0 | 5 | |
| 1 | 1 | 1 | 1 | 6 | |
| 1 | 1 | 1 | 1 | 7 | |
| 1 | 1 | 1 | 1 | 8 | |
| X | X | X | X | 9 | |
| X | X | X | X | 10 | |
| 0 | 0 | 0 | 0 | 11 | Priority |
| 0 | 0 | 0 | 0 | 12 | Packet ID (PID) |
| 0 | 0 | 0 | 0 | 13 | |
| 0 | 0 | 0 | 0 | 14 | |
| 0 | 0 | 0 | 0 | 15 | |
| 1 | 0 | 1 | 1 | 16 | |
| 0 | 0 | 0 | 0 | 17 | |

(continued)

| PMT | PAT | Audio | Video | Bit Position | |
|---|---|---|---|---|---|
| 0 | 0 | 0 | 0 | 18 | |
| 0 | 0 | 0 | 0 | 19 | |
| 0 | 0 | 1 | 1 | 230 | |
| 0 | 0 | 0 | 0 | 21 | |
| 0 | 0 | 1 | 0 | 22 | |
| 0 | 0 | 0 | 1 | 23 | |
| 0 | 0 | 0 | 1 | 24 | |
| 0 | 0 | 0 | 0 | 25 | Scrambling Ctrl |
| 0 | 0 | 0 | 0 | 26 | |
| X | X | X | X | 27 | Adaptation Field Ctrl |
| 1 | 1 | 1 | 1 | 28 | |
| X | X | X | X | 29 | |
| X | X | X | X | 30 | |
| X | X | X | X | 31 | |
| X | X | X | X | 32 | |

In step 44, the next media transport stream packet is obtained and if it has no errors it will be passed on to be decoded and output. However, if the packet is erroneous, it will be passed on to 45. In step 45, the packet type is determined. Determining the packet type may be performed by an identification step and a verification step. In the identification step, a potential type of an erroneous packet, such as audio, video, PMT and so on is determined by computing a Hamming distance between each of the masks and the received packet. If the Hamming distance between any of the header masks and the considered packet is zero, then the type of the erroneous packet is declared to be the same as the packet that has that header mask. Otherwise, the step of verification is done. For the verification, for example the top three identified candidates in terms of the Hamming distance may be selected for the verification. For the verification, additional packet information is compared, which will be described in more detail below. Based on the following equation, a confidence factor (CF) is defined:

$$CF = \frac{1}{2}\left(\frac{\text{Number of identical masks bits}}{\text{Total number of bits in the header mask}} + \frac{\text{Number of identical additional information bits}}{\text{Total number of additional information bits}}\right)$$

The header type candidate with the highest confidence factor is declared to be the packet type of the erroneous packet.

In step 46, the header error rate is estimated, for example based on the following equation:

$$\text{Error Rate} = \frac{\text{Number of erroneous bits}}{\text{Total number of mask bits}} \times 100\%$$

where the number of erroneous bits is determined as the Hamming distance of the verified candidate mask.

In step 47, it is decided whether or not to repair the packet. If the error rate is lower than the error threshold, then in step 48 the packet is repaired. Else, the packet is discarded in step 49. An independent decision for repairing or not repairing is made for each packet.

In step 48, the packet is repaired in the following way. The header errors are repaired with the header mask. Furthermore, information of the packet beyond the header may be repaired using the additional packet information as will be described below. After repairing the packet, the packet will be decoded and output in step 48.

As described above in connection with steps 45 and 48, additional packet information may be taken into account for determining the packet type and for repairing the packet. The additional packet information may relate to an extended number of structural information of the different types of packets. In particular, it may be distinguished among video, audio, PAT, PMT, OD, SD and Null packets. The specific characteristics of these packet types may further assist for correcting certain errors. In other words, the manner in which different data is organized in the different types of packets may be utilized for determining the packet type and for repairing the packet. It is to be noted that some parts of the given packet type are fixed while other parts may be variable. In the following, a list of the characteristics for the different considered types of packets is provided. The characteristics are very useful in identifying and correcting these packets.

**Characteristics of video packets**

- 24-bit packet start code prefix = 0x00 0001 is used to indicate the start of the next packetized elementary stream (PES) packet.
- Video stream ID is fixed.
- All flags in the adaptation field should be ZERO, except the random access flag, which could be zero or one.
- If the 'Adaptation Field Presence Type' = 0, then

    ◦ Adaptation field is present ONLY to pad the TS packet in which a PES packet ends. As a consequence, both payload unit start indicator and adaptation field presence flags cannot be both = 1 for the same packet.

- If the 'Adaptation Field Presence Type' = 1, then

    ◦ Adaptation field always comes ONLY

    - To pad the TS packet in which a PES packet ends
    - In all packets where a PES packet starts

Any of the following cases could occur:

    ◦ Case 1: When ES packet starts with this TS packet but it does not end within this TS packet, we can verify with good confidence (as much as 40-bits known).
    ◦ Case 2: When ES packet ends with this TS packet but it did not started with this TS packet, we can verify with fair confidence (at lease 16-bits known).
    ◦ Case 3: When ES packet starts and ends in this TS packet, we can verify with fair confidence (at leaset 16-bits known).
    ◦ Case 4: When ES packet neither starts nor ends in this TS packet, we can verify with very little confidence (maybe through continuity-counter 4-bits known with some certainty).

**Characteristics of audio packets**

- Very often each of the TS packets contains a complete PES packet.
- 24-bit packet start code prefix = 0x00 0001 is used to indicate the start of the next PES packet.
- Audio stream ID is fixed.
- Adaptation field is present in almost every packet.
- PES header length is always less than PES packet length.

**Characteristics of PAT packets**

- Table ID = 0 (Byte # 6)
- Section length must be 13 bytes long for all the examined DMB streams

    → Byte # 7 = 0xBO
    → Byte # 8 = 0xOD

- Section length must be less than 32 bytes

      → Byte # 7 = 0xBO
      → Byte # 8 = 0b001x xxxx

**Characteristics of PMT packets**

- Table ID = 2 (Byte # 6)
- Next two bytes after 'last sec. no' are 3-MSB = 0b111 & 13-LSB = Audio PID (PID of the packets containing PCR)
- In program info length (byte # 16-17) are 4-MSB = 0b1111 & 12-LSB = program length <= 188-17 = 171 → Byte#16 must be'11110000' or 0xF0

**Common Characteristics PAT and PMT Packets**

- Payload unit start indicator = 1
- Adaptation field ctrl bits should be ='01'
- Adaptation field length must be = 0x00
- Section length <= 180 bytes ==> 4 bits (MSB) in section length must be zero.
- Section number = 0x00
- Last section number = 0x00
- All bytes in the packet after the section length should be 0xFF, which verifies the section length
- Cyclic redundancy check

**Characteristics of OD Packets**

- Payload unit start indicator = 1
- Adaptation field ctrl bits should be ='01'
- Adaptation field length must be = 0x00
- Table ID = 0x05
- Section length <= 180 bytes ==> 4 bits (MSB) in Section length must be zero
- Section Number = 0x00
- Last section number = 0x00
- All bytes in the packet after the section length should be 0xFF, which verifies the Section length
- Cyclic redundancy check

**Characteristics of SD Packets**

- Payload unit start indicator = 1
- Adaptation field ctrl bits should be ='01'
- Adaptation field length must be = 0x00
- Table ID = 0x04
- Section length <= 180 bytes ==> 4 bits (MSB) in section length must be zero
- Section number = 0x00
- Last section number = 0x00
- All bytes in the packet after the section length should be 0xFF, which verifies the section length
- Cyclic redundancy check

**Characteristics of Null Packets**

- Payload Unit start indicator is always = 0b0
- Adaptation field is never present
- All payload bytes have fixed value = 0xFF
- If confirmed, the best treatment of the packet is to set TxErrIndicator = 1, without repair

To sum up, the above-described method for receiving, repairing and processing packets of a digital media transport stream repairs the adaption field and some parts of the data in addition to the header. Furthermore, the method makes a decision to repair a packet or leave it untouched to not engage a repair if the number of errors is too high and hence may overload the algorithm and to reduce the risk of decoder crash/failure and/or further degradation of video quality.

**Claims**

1. A method for correcting errors in a digital media transport stream, wherein the digital media transport stream comprises a stream of digital data packets, wherein each digital data packet of the stream of digital data packets comprises at least one header data field and information blocks in payload data uniquely identifying a packet type of the corresponding digital data packet, wherein the packet type is one of a plurality of packet types pre-defined for the digital media transport stream, wherein the plurality of pre-defined packet types comprises a video data packet, an audio data packet, a program association table packet, a program map table packet, a scene description packet, an object description packet and a Null packet, the method comprising:

   - retrieving (43) a plurality of header masks from error-free packets of the underlying media transport stream or from a storage device, wherein each header mask is associated with a corresponding packet type of the plurality of packet types and wherein each header mask identifies those header data fields which uniquely identify the associated packet type and provides an expected value or value range for each of those header data fields,
   - receiving (44) a digital data packet of the digital media transport stream,
   - for each header mask of the plurality of header masks: comparing the header data fields of the received digital data packet with the header data fields of the header mask, and determining a Hamming distance between the header data fields of the received digital data packet and the header data fields of the header mask,
   - in case the determined Hamming distance between the header data fields of the received digital data packet and the header data fields of one of the header masks is zero: determining the packet type of the one header mask as the packet type of the received digital data packet,
   - in case the determined Hamming distance between the header data fields of the received digital data packet and the header data fields of none of the header masks is zero:

      - determining a predefined number of the packet types associated with those header masks having the smallest Hamming distances with respect to the received digital data packet,
      - determining for each determined packet type a confidence factor based on a comparison of additional data of the received digital data packet and expected additional data predefined for the corresponding packet type, wherein the additional data comprises predefined parts of the payload data subsequent to the header data fields, wherein the expected additional data is predefined specifically for each packet type, and
      - determining the packet type with the highest confidence factor as the packet type of the received digital data packet, and

   - correcting (48) the received digital data packet based on the determined packet type.

2. The method according to claim 1, wherein correcting the received digital data packet comprises:

   - estimating (46) a header error rate of the received digital data packet based on the determined packet type,
   - comparing (47) the header error rate with a header error rate threshold predetermined for each packet type of the plurality of packet types, and
   - correcting (48) the received digital data packet based on the comparison of the estimated header error rate with the predetermined header error rate threshold only, if the estimated header error rate does not exceed the predetermined header error rate threshold.

3. The method according to claim 2, wherein the predetermined header error rate threshold comprises at least one of:

- a header error rate depending value between 0 and 3 for a video data packet,
- a header error rate depending value between 0 and 4 for an audio data packet,
- a value of 0 for a program association table packet,
- a value of 0 for a program map table packet,
- a value of 0 for a scene description packet,
- a value of 0 for an object description packet, and
- a value of 0 for a Null packet.

4. The method according to any one of the preceding claims, wherein the additional data for a received video data packet comprises at least one of

- a packet start code prefix indicating a start of a next packetized elementary stream package,
- a video stream identifier,
- an adaption field presence flag,
- a payload start indicator flag, and
- flags of an adaption field.

5. The method according to any one of the preceding claims, wherein the additional data for a received audio data packet comprises at least one of

- a packet start code prefix indicating a start of a next packetized elementary stream package,
- an audio stream identifier,
- an adaption field presence flag,
- a packetized elementary stream header length, and
- a packetized elementary stream packet length.

6. The method according to any one of the preceding claims, wherein the additional data for a received program association table packet comprises at least one of

- a payload unit start indicator,
- adaption field control bits,
- an adaption field length,
- a section length,
- a section number,
- a last section number,
- bytes in the packet after the section length information,
- a cyclic redundancy check information, and
- a table identifier.

7. The method according to any one of the preceding claims, wherein the additional data for a received program map table packet comprises at least one of

- a payload unit start indicator,
- adaption field control bits,
- an adaption field length,
- a section length,
- a section number,
- a last section number,
- bytes in the packet after the section length information,
- a cyclic redundancy check information,
- a table identifier,
- a two-byte information following the last section number relating to audio PID, and
- a program information length.

8. The method according to any one of the preceding claims, wherein the additional data for a received object description packet comprises at least one of

- a payload unit start indicator,

- adaption field control bits,
- an adaption field length,
- a table identifier,
- a section length,
- a section number,
- a last section number,
- bytes in the packet after the section length information, and
- a cyclic redundancy check information.

9. The method according to any one of the preceding claims, wherein the additional data for a received scene description packet comprises at least one of

- a payload unit start indicator,
- adaption field control bits,
- an adaption field length,
- a table identifier,
- a section length,
- a section number,
- a last section number,
- bytes in the packet after the section length information, and
- a cyclic redundancy check information.

10. A correction device for correcting errors in a digital media transport stream, wherein the digital media transport stream comprises a stream of digital data packets, wherein each digital data packet of the stream of digital data packets comprises at least one header data field and information blocks in payload data uniquely identifying a packet type of the corresponding digital data packet, wherein the packet type is one of a plurality of packet types pre-defined for the digital media transport stream, wherein the plurality of pre-defined packet types comprises a video data packet, an audio data packet, a program association table packet, a program map table packet, a scene description packet, an object description packet and a Null packet, the correction device (13) comprising a processing unit configured to

- receive a digital data packet of the digital media transport stream,
- retrieve a plurality of header masks from a storage device, wherein each header mask is associated with a corresponding packet type of the plurality of packet types and wherein each header mask identifies those header data fields which uniquely identify the associated packet type and provides an expected value or value range for each of those header data fields,
- compare for each header mask of the plurality of header masks the header data fields of the received digital data packet with the header data fields of the header mask, and determine a Hamming distance between the header data fields of the received digital data packet and the header data fields of the header mask,
- in case the determined Hamming distance between the header data fields of the received digital data packet and the header data fields of one of the header masks is zero: determine the packet type of the one header mask as the packet type of the received digital data packet,
- in case the determined Hamming distance between the header data fields of the received digital data packet and the header data fields of none of the header masks is zero:

  - determine a predefined number of the packet types associated with those header masks having the smallest Hamming distances with respect to the received digital data packet,
  - determine for each determined packet type a confidence factor based on a comparison of additional data of the received digital data packet and expected additional data predefined for the corresponding packet type, wherein the additional data comprises predefined parts of the payload data subsequent to the header data fields, wherein the expected additional data is predefined specifically for each packet type, and
  - determine the packet type with the highest confidence factor as the packet type of the received digital data packet, and

- correct the received digital data packet based on the determined packet type.

11. The correction device according to claim 10, wherein the correction device (13) is configured to perform the method according to any one of claims 2-9.

**12.** An electronic device, comprising:

- a receiver device (12) for receiving digital data packets of a digital media transport stream,
- a correction device (13) according to claim 10 or 11 coupled to the receiver device for receiving the digital data packets, and
- an output device (14, 15) coupled to the correction device (13) for receiving the corrected digital data packets form the correction device (13) and configured to output the corrected data packets.

**Patentansprüche**

**1.** Verfahren zur Fehlerkorrektur in einem digitalen Medientransportstrom, wobei der digitale Medientransportstrom einen Strom von digitalen Datenpaketen umfasst, wobei jedes digitale Datenpaket des Stroms von digitalen Datenpaketen zumindest ein Kopfzeilendatenfeld und Informationsblöcke von Nutzlastdaten umfasst, die einen Pakettyp des entsprechenden digitalen Datenpakets eindeutig identifizieren, wobei der Pakettyp einer von einer Vielzahl von für den digitalen Medientransportstrom vordefinierten Pakettypen ist, wobei die Vielzahl von vordefinierten Pakettypen ein Videodatenpaket, ein Audiodatenpaket, ein Program-Association-Table-Paket, ein Program-Map-Table-Paket, ein Szenenbeschreibungspaket, ein Objektbeschreibungspaket und ein Null-Paket umfasst, wobei das Verfahren Folgendes umfasst:

- Abrufen (43) einer Vielzahl von Kopfzeilenmasken aus fehlerfreien Paketen des zugrundeliegenden Medientransportstroms oder von einer Speichervorrichtung, wobei jede Kopfzeilenmaske einem entsprechenden Pakettyp der Vielzahl von Pakettypen zugeordnet ist und wobei jede Kopfzeilenmaske die Kopfzelendatenfelder identifiziert, die den zugeordneten Pakettyp eindeutig identifizieren, und einen erwarteten Wert oder Wertebereich für jede der Kopfzeilendatenfelder bereitstellt,
- Empfangen (44) eines digitalen Datenpakets des digitalen Medientransportstroms,
- für jede Kopfzeilenmaske der Vielzahl von Kopfzeilenmasken: Vergleichen der Kopfzeilendatenfelder des empfangenen digitalen Datenpakets mit den Kopfzeilendatenfeldern der Kopfzeilenmaske und Festlegen eines Hamming-Abstands zwischen den Kopfzeilendatenfeldern des empfangenen digitalen Datenpakets und den Kopfzeilendatenfeldern der Kopfzeilenmaske,
- falls der festgelegte Hamming-Abstand zwischen den Kopfzeilendatenfeldern des empfangenen digitalen Datenpakets und den Kopfzeilendatenfeldem von einer der Kopfzeilenmasken Null ist: Festlegen des Pakettyps der einen Kopfzeilenmaske als den Pakettyp des empfangenen digitalen Datenpakets,
- falls der festgelegte Hamming-Abstand zwischen den Kopfzeilendatenfeldern des empfangenen digitalen Datenpakets und den Kopfzeilendatenfeldern von keiner der Kopfzeilenmasken Null ist:

  - Festlegen einer vordefinierten Anzahl von Pakettypen, die den Kopfzeilenmasken zugeordnet sind, die die geringsten Hamming-Abstände aufweisen, bezogen auf das empfangene digitale Datenpaket,
  - Festlegen eines Konfidenzfaktors für jeden festgelegten Pakettyp auf Grundlage eines Vergleichs von zusätzlichen Daten des empfangenen digitalen Datenpakets mit erwarteten zusätzlichen, für den entsprechenden Pakettyp vordefinierten Daten, wobei die zusätzlichen Daten vordefinierte Teile der Nutzlastdaten im Anschluss an die Kopfzeilendatenfelder umfassen, wobei die erwarteten zusätzlichen Daten speziell für jeden Pakettyp vordefiniert werden, und
  - Festlegen des Pakettyps mit dem höchsten Konfidenzfaktor als den Pakettyp des empfangenen digitalen Datenpakets, und

- Korrigieren (48) des empfangenen Datenpakets auf Grundlage des festgelegten Pakettyps.

**2.** Verfahren nach Anspruch 1, wobei das Korrigieren des empfangenen digitalen Datenpakets Folgendes umfasst:

- Schätzen (46) einer Kopfzeilenfehlerrate des empfangenen digitalen Datenpakets auf Grundlage des festgelegten Pakettyps,
- Vergleichen (47) der Kopfzeilenfehlerrate mit einem für jeden Pakettyp der Vielzahl von Pakettypen vorbestimmten Kopfzeilenfehlerratenschwellenwert und
- Korrigieren (48) des empfangenen digitalen Datenpakets auf Grundlage des Vergleichs der geschätzten Kopfzeilenfehlerrate mit dem vorbestimmten Kopfzeilenfehlerratenschwellenwert, lediglich wenn die geschätzte Kopfzeilenfehlerrate den vorbestimmten Kopfzeilenfehlerratenschwellenwert nicht überschreitet.

**3.** Verfahren nach Anspruch 2, wobei der vorbestimmte Kopfzeilenfehlerratenschwellenwert zumindest eines von Folgendem umfasst:

- einen von der Kopfzeilenfehlerrate abhängigen Wert zwischen 0 und 3 für ein Videodatenpaket,
- einen von der Kopfzeilenfehlerrate abhängigen Wert zwischen 0 und 4 für ein Audiodatenpaket,
- einen Wert von 0 für ein Program-Association-Table-Paket,
- einen Wert von 0 für ein Program-Map-Table-Paket,
- einen Wert von 0 für ein Szenenbeschreibungspaket,
- einen Wert von 0 für ein Objektbeschreibungspaket und
- einen Wert von 0 für ein Null-Paket.

**4.** Verfahren nach einem der vorhergehenden Ansprüche, wobei die zusätzlichen Daten für ein empfangenes Videodatenpaket zumindest eines von Folgendem umfassen:

- ein Paket-Startcode-Präfix, das den Beginn eines nächsten paketierten Elementarstrompakets anzeigt,
- eine Videostromkennung,
- eine Adaptionsfeldpräsenzflagge,
- eine Nutzlastbeginnanzeigeflagge und
- Flaggen eines Adaptionsfelds.

**5.** Verfahren nach einem der vorhergehenden Ansprüche, wobei die zusätzlichen Daten für ein empfangenes Audiodatenpaket zumindest eines von Folgendem umfassen:

- ein Paket-Startcode-Präfix, das den Beginn eines nächsten paketierten Elementarstrompakets anzeigt,
- eine Audiostromkennung,
- eine Adaptionsfeldpräsenzflagge,
- eine paketierte Elementarstromkopfzeilenlänge und
- eine paketierte Elementarstrompaketlänge.

**6.** Verfahren nach einem der vorhergehenden Ansprüche, wobei die zusätzlichen Daten für ein empfangenes Program-Association-Table-Paket zumindest eines von Folgendem umfassen:

- eine Nutzlasteinheitenbeginnkennung,
- Adaptionsfeldsteuerbits,
- eine Adaptionsfeldlänge,
- eine Abschnittslänge,
- eine Nummer des Abschnitts,
- eine Nummer des letzten Abschnitts,
- Bytes in dem Paket nach den Informationen über die Abschnittslänge,
- Informationen über eine zyklische Redundanzprüfung und
- eine Tabellenkennung.

**7.** Verfahren nach einem der vorhergehenden Ansprüche, wobei die zusätzlichen Daten für ein empfangenes Program-Map-Table-Paket zumindest eines von Folgendem umfassen:

- eine Nutzlasteinheitenbeginnkennung,
- Adaptionsfeldsteuerbits,
- eine Adaptionsfeldlänge,
- eine Abschnittslänge,
- eine Nummer des Abschnitts,
- eine Nummer des letzten Abschnitts,
- Bytes in dem Paket nach den Informationen über die Abschnittslänge,
- Informationen über eine zyklische Redundanzprüfung,
- eine Tabellenkennung,
- Zwei-Byte-Informationen nach der Nummer des letzten Abschnitts in Bezug auf Audio-PID und
- eine Programminformationslänge.

**8.** Verfahren nach einem der vorhergehenden Ansprüche, wobei die zusätzlichen Daten für ein empfangenes Objektbeschreibungspaket zumindest eines von Folgendem umfassen:

- eine Nutzlasteinheitenbeginnkennung,
- Adaptionsfeldsteuerbits,
- eine Adaptionsfeldlänge,
- eine Tabellenkennung,
- eine Abschnittslänge,
- eine Nummer des Abschnitts,
- eine Nummer des letzten Abschnitts,
- Bytes in dem Paket nach den Informationen über die Abschnittslänge und
- Informationen über eine zyklische Redundanzprüfung.

9. Verfahren nach einem der vorhergehenden Ansprüche, wobei die zusätzlichen Daten für ein empfangenes Szenenbeschreibungspaket zumindest eines von Folgendem umfassen:

- eine Nutzlasteinheitenbeginnkennung,
- Adaptionsfeldsteuerbits,
- eine Adaptionsfeldlänge,
- eine Abschnittslänge,
- eine Tabellenkennung,
- eine Abschnittslänge,
- eine Nummer des Abschnitts,
- eine Nummer des letzten Abschnitts,
- Bytes in dem Paket nach den Informationen über die Abschnittslänge und
- Informationen über eine zyklische Redundanzprüfung.

10. Korrekturvorrichtung zur Fehlerkorrektur in einem digitalen Medientransportstrom, wobei der digitale Medientransportstrom einen Strom von digitalen Datenpaketen umfasst, wobei jedes digitale Datenpaket des Stroms von digitalen Datenpaketen zumindest ein Kopfzeilenfeld und Informationsblöcke von Nutzlastdaten umfasst, die einen Pakettyp des entsprechenden digitalen Datenpakets eindeutig identifizieren, wobei der Pakettyp einer von einer Vielzahl von für den digitalen Medientransportstrom vordefinierten Pakettypen ist, wobei die Vielzahl von vordefinierten Pakettypen ein Videodatenpaket, ein Audiodatenpaket, ein Program-Association-Table-Paket, ein Program-Map-Table-Paket, ein Szenenbeschreibungspaket, ein Objektbeschreibungspaket und ein Null-Paket umfasst, wobei die Korrekturvorrichtung (13) eine Verarbeitungseinheit umfasst, die konfiguriert ist, um:

- ein digitales Datenpaket des digitalen Medientransportstroms zu empfangen,
- eine Vielzahl von Kopfzeilenmasken von einer Speichervorrichtung abzurufen, wobei jede Kopfzeilenmaske einem entsprechenden Pakettyp der Vielzahl von Pakettypen zugeordnet ist und wobei jede Kopfzeilenmaske die Kopfzelendatenfelder identifiziert, die den zugeordneten Pakettyp eindeutig identifizieren, und einen erwarteten Wert oder Wertebereich für jedes der Kopfzeilendatenfelder bereitstellt,
- für jede Kopfzeilenmaske der Vielzahl von Kopfzeilenmasken die Kopfzeilendatenfelder des empfangenen digitalen Datenpakets mit den Kopfzeilendatenfeldern der Kopfzeilenmaske zu vergleichen und einen Hamming-Abstand zwischen den Kopfzeilendatenfeldern des empfangenen digitalen Datenpakets und den Kopfzeilendatenfeldern der Kopfzeilenmaske festzulegen,
- falls der festgelegte Hamming-Abstand zwischen den Kopfzeilendatenfeldern des empfangenen digitalen Datenpakets und den Kopfzeilendatenfeldern von einer der Kopfzeilenmasken Null ist: den Pakettyp der einen Kopfzeilenmaske als den Pakettyp des digitalen empfangenen Datenpakets festzulegen,
- falls der festgelegte Hamming-Abstand zwischen den Kopfzeilendatenfeldern des empfangenen digitalen Datenpakets und den Kopfzeilendatenfeldern von keiner der Kopfzeilernnasken Null ist:

  - eine vordefinierte Anzahl von Pakettypen, die den Kopfzeilenmasken zugeordnet sind, die die geringsten Hamming-Abstände aufweisen, bezogen auf das empfangene digitale Datenpaket festzulegen,
  - einen Konfidenzfaktor für jeden festgelegten Pakettyp auf Grundlage eines Vergleichs von zusätzlichen Daten des empfangenen digitalen Datenpakets mit erwarteten zusätzlichen, für den entsprechenden Pakettyp vordefinierten Daten festzulegen, wobei die zusätzlichen Daten vordefinierte Teile der Nutzlastdaten im Anschluss an die Kopfzeilendatenfelder umfassen, wobei die erwarteten zusätzlichen Daten speziell für jeden Pakettyp vordefiniert werden, und
  - den Pakettyp mit dem höchsten Konfidenzfaktor als den Pakettyp des empfangenen digitalen Datenpakets festzulegen, und

- das empfangene Datenpaket auf Grundlage des festgelegten Pakettyps zu korrigieren.

11. Korrekturvorrichtung nach Anspruch 10, wobei die Korrekturvorrichtung (13) konfiguriert ist, um das Verfahren nach einem der Ansprüche 2-9 auszuführen.

12. Elektronische Vorrichtung, umfassend:

- eine Empfangsvorrichtung (12) zum Empfangen von digitalen Datenpaketen eines digitalen Medientransportstroms,
- eine Korrekturvorrichtung (13) nach Anspruch 10 oder 11, die zum Empfangen der digitalen Datenpakete an die Empfangsvorrichtung gekoppelt ist, und
- eine Ausgabevorrichtung (14, 15), die zum Empfangen der korrigierten digitalen Datenpakete von der Korrekturvorrichtung (13) an die Korrekturvorrichtung (13) gekoppelt ist und konfiguriert ist, um die korrigierten Datenpakete auszugeben.

**Revendications**

1. Procédé pour la correction d'erreurs dans un flux de transport multimédia numérique, dans lequel le flux de transport multimédia numérique comprend un flux de paquets de données numériques, dans lequel chaque paquet de données numériques du flux de paquets de données numériques comprend au moins un champ de données d'entête et des blocs d'information sous la forme de données utiles identifiant uniquement un type de paquet du paquet de données numériques correspondant, dans lequel le type de paquet est un type parmi une pluralité de types de paquets prédéfinis pour le flux de transport multimédia numérique, dans lequel la pluralité de types de paquets prédéfinis comprend un paquet de données vidéo, un paquet de données audio, un paquet de tableaux d'association de programmes, un paquet de tableaux de mappage de programmes, un paquet de description de scénarii, un paquet de description d'objets et un paquet nul, le procédé comprenant :

- la récupération (43) d'une pluralité de masques d'entête provenant de paquets sans erreur du flux de transport multimédia sous-jacent ou provenant d'un dispositif de stockage, dans lequel chaque masque d'entête est associé à un type de paquet correspondant de la pluralité de types de paquets et dans lequel chaque masque d'en-tête identifie ces champs de données d'entête, qui identifient uniquement le type de paquet associé, et fournit une valeur attendue ou une fourchette de valeurs pour chacun desdits champs de données d'entête,
- la réception (44) d'un paquet de données numériques du flux de transport multimédia numérique,
- pour chaque masque d'en-tête de la pluralité de masques d'en-tête : la comparaison des champs de données d'entête du paquet de données numériques reçu aux champs de données d'en-tête du masque d'en-tête, et la détermination d'une distance de Hamming entre les champs de données d'en-tête du paquet de données numériques reçu et les champs de données d'en-tête du masque d'en-tête,
- si la distance de Hamming déterminée entre les champs de données d'en-tête du paquet de données numériques reçu et les champs de données d'en-tête de l'un des masques d'en-tête est égale à zéro : la détermination du type de paquet du masque d'en-tête faisant office précisément de type de paquet du paquet de données numériques reçu,
- si la distance de Hamming déterminée entre les champs de données d'en-tête du paquet de données numériques reçu et les champs de données d'en-tête d'aucun des masques d'en-tête est égale à zéro :
- la détermination d'un nombre prédéfini de types de paquets associés auxdits masques d'en-tête présentant les distances de Hamming les plus petites par rapport au paquet de données numériques reçu,
- la détermination, pour chaque type de paquets déterminé, d'un facteur de confiance sur la base d'une comparaison des données supplémentaires du paquet de données numériques reçu et des données supplémentaires attendues prédéfinies pour le type de paquet correspondant, dans lequel les données supplémentaires comprennent des parties prédéfinies des données utiles faisant suite aux champs de données d'en-tête, dans lequel les données supplémentaires attendues sont prédéfinies de manière spécifique pour chaque type de paquet, et
- la détermination du type de paquet avec le facteur de confiance le plus élevé par rapport au type de paquet du paquet de données numériques reçu, et
- la correction (48) du paquet de données numériques reçu sur la base du type de paquet déterminé.

2. Procédé selon la revendication 1, dans lequel la correction du paquet de données numériques reçu comprend :

- l'estimation (46) d'un taux d'erreur d'en-tête du paquet de données numériques reçu sur la base du type de paquet déterminé,
- la comparaison (47) du taux d'erreur d'en-tête avec un seuil de taux d'erreur d'en-tête prédéterminé pour chaque type de paquet de la pluralité de types de paquets, et
- la correction (48) du paquet de données numériques reçu sur la base de la comparaison du taux d'erreur d'en-tête estimé avec le seuil de taux d'erreur d'en-tête prédéterminé seulement si le taux d'erreur d'en-tête estimé ne dépasse pas le seuil de taux d'erreur d'en-tête prédéterminé.

3. Procédé selon la revendication 2, dans lequel le seuil de taux d'erreur prédéterminé comprend au moins un des éléments suivants :

- un taux d'erreur d'en-tête selon une valeur entre 0 et 3 pour un paquet de données vidéo,
- un taux d'erreur d'en-tête selon une valeur entre 0 et 4 pour un paquet de données audio,
- une valeur de 0 pour un paquet de tableaux d'association de programmes,
- une valeur de 0 pour un paquet de tableaux de mappage de programmes,
- une valeur de 0 pour un paquet de descriptions de scénarii,
- une valeur de 0 pour un paquet de descriptions d'objets, et
- une valeur de 0 pour un paquet nul.

4. Procédé selon l'une quelconque des revendications précédentes, dans lequel les données supplémentaires pour un paquet de données vidéo reçu comprennent au moins un des éléments suivants

- un préfixe de code de lancement de paquet indiquant un lancement d'un paquet qui suit de flux élémentaire mis en paquets,
- un identifiant de flux vidéo,
- un drapeau de présence de champ d'adaptation,
- un drapeau indicateur de lancement utile, et
- des drapeaux pour un champ d'adaptation.

5. Procédé selon l'une quelconque des revendications précédentes, dans lequel les données supplémentaires pour un paquet de données audio reçu comprennent au moins un des éléments suivants

- un préfixe de code de lancement de paquet indiquant un lancement d'un paquet de flux élémentaire mis en paquets,
- un identifiant de flux audio,
- un drapeau de présence de champ d'adaptation,
- une longueur d'en-tête de flux élémentaire mis en paquets, et
- une longueur de paquet de flux élémentaire mis en paquets.

6. Procédé selon l'une quelconque des revendications précédentes, dans lequel les données supplémentaires pour un paquet de tableaux d'association de programmes reçu comprennent au moins un des éléments suivants

- un indicateur de lancement d'unité utile,
- des bits de contrôle de champ d'adaptation,
- une longueur de champ d'adaptation,
- une longueur de section,
- un nombre de section,
- un dernier nombre de section,
- des octets dans le paquet après l'information de longueur de section,
- une information de vérification de redondance cyclique, et
- un identifiant de tableau.

7. Procédé selon l'une quelconque des revendications précédentes, dans lequel les données supplémentaires pour un paquet de tableaux de mappage de programmes reçu comprennent au moins un des éléments suivants

- un indicateur de lancement d'unité utile,

- des bits de commande de champ d'adaptation,
- une longueur de champ d'adaptation,
- une longueur de section,
- un nombre de section,
- un dernier nombre de section,
- des octets dans le paquet après l'information de longueur de section,
- une information de vérification de redondance cyclique ;
- un identifiant de tableau,
- une information à deux octets suivant le dernier nombre de section concernant un PID audio, et
- une longueur d'information de programme.

8. Procédé selon l'une quelconque des revendications précédentes, dans lequel les données supplémentaires pour un paquet de descriptions d'objets reçu comprennent au moins un des éléments suivants

- un indicateur de lancement d'unité utile,
- des bits de commande de champ d'adaptation,
- une longueur de champ d'adaptation,
- un identifiant de tableau,
- une longueur de section,
- un nombre de section,
- un dernier nombre de section,
- des octets dans le paquet après l'information de longueur de section, et
- une information de vérification de redondance cyclique.

9. Procédé selon l'une quelconque des revendications précédentes, dans lequel les données supplémentaires pour un paquet de descriptions de scénarii reçu comprennent au moins un des éléments suivants

- un indicateur de lancement d'unité utile,
- des bits de commande de champ d'adaptation,
- une longueur de champ d'adaptation,
- un identifiant de tableau,
- une longueur de section,
- un nombre de section,
- un dernier nombre de section,
- des octets dans le paquet après l'information de longueur de section, et
- une information de vérification de redondance cyclique.

10. Dispositif de correction pour la correction d'erreurs dans un flux de transport multimédia numérique, dans lequel le flux de transport média numérique comprend un flux de paquets de données numériques, dans lequel chaque paquet de données numériques du flux de paquets de données numériques comprend au moins un champ de données d'en-tête et des blocs d'information en des données utiles identifiant uniquement un type de paquet du paquet de données numériques correspondant, dans lequel le type de paquet est un type parmi une pluralité de types de paquets prédéfinis pour le flux de transport multimédia numérique, dans lequel la pluralité de types de paquets prédéfinie comprend un paquet de données vidéo, un paquet de données audio, un paquet de tableaux d'association de programmes, un paquet de tableaux de mappage de programmes, un paquet de descriptions de scénarii, un paquet de descriptions d'objets et un paquet nul, ledit dispositif de correction (13) comprenant une unité de traitement configuré pour

- recevoir un paquet de données numériques du flux de transport multimédia numérique,
- récupérer une pluralité de masques d'en-tête provenant d'un dispositif de stockage, dans lequel chaque masque d'en-tête est associé à un type de paquet correspondant parmi une pluralité de types de paquets et dans lequel chaque masque d'en-tête identifie lesdits champs de données d'en-tête, qui identifient uniquement le type de paquet associé, et fournit une valeur attendue ou une fourchette de valeurs attendues pour chacun desdits champs de données d'en-tête,
- comparer, pour chaque masque d'en-tête de la pluralité de masques d'en-tête, les champs de données d'en-tête du paquet de données numériques reçu aux champs de données d'en-tête du masque d'en-tête, et déterminer une distance de Hamming entre les champs de données d'en-tête du paquet de données numériques reçu et les champs de données d'en-tête du masque d'en-tête,

- si la distance de Hamming déterminée entre les champs de données d'en-tête du paquet de données numériques reçu et les champs de données d'en-tête d'un des masques d'entête est égale à zéro : déterminer le type de paquet du masque d'en-tête faisant office précisément du type de paquet du paquet de données numériques reçu,

- si la distance de Hamming prédéterminée entre les champs de données d'en-tête du paquet de données numériques reçu et les champs de données d'en-tête d'aucun des masques d'en-tête est égale à zéro :

- déterminer un nombre prédéfini de types de paquets associés auxdits masques d'en-tête présentant les distances de Hamming les plus petites par rapport au paquet de données numériques reçu,

- déterminer, pour chaque type de paquet déterminé, un facteur de confiance sur la base d'une comparaison de données supplémentaires du paquet de données numériques reçu et des données supplémentaires attendues prédéfinies pour le type de paquet correspondant, les données supplémentaires comprenant des parties prédéfinies des données utiles faisant suite aux champs de données d'entête, les données supplémentaires attendues étant prédéfinies de manière spécifique pour chaque type de paquet, et

- déterminer le type de paquet avec le facteur de confiance le plus élevé par rapport au type de paquet du paquet de données de données numériques reçu, et

- corriger le paquet de données numériques reçu sur la base du type de paquet prédéterminé.

11. Dispositif de correction selon la revendication 10, dans lequel le dispositif de correction (13) est configuré afin de mettre en oeuvre le procédé selon l'une quelconque des revendications 2 à 9.

12. Dispositif électronique, comprenant :

- un dispositif de réception (12) pour la réception de paquets de données numériques d'un flux de transport multimédia numérique,

- un dispositif de correction (13) selon la revendication 10 ou 11 couplé au dispositif de réception pour la réception des paquets de données numériques, et

- un dispositif de sortie (14, 15) couplé au dispositif de correction (13) pour la réception des paquets de données numériques corrigés provenant du dispositif de correction (13) et configuré pour sortir les paquets de données corrigés.

**Fig. 1**

| Set error thresholds | 41 |
| Gather necessary information about media stream | 42 |
| Generate header masks | 43 |
| Receive next erroneous packet | 44 |
| Determine packet type | 45 |
| Estimate header error rate | 46 |

Error rate ≤ threshold? — 47

No

Yes

| Repair, decode and output the packet | 48 |
| Discard packet | 49 |

40

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4748619 A

### Non-patent literature cited in the description

- A heuristic header error recovery scheme for RTP. **SCHMIDT ; FLORIAN et al.** 10th ANNUAL CONFERENCE ON WIRELESS ON-DEMAND NETWORK SYSTEMS AND SERVICES (WONS). IEEE, 18 March 2013

- **XAVI ARTIGAS et al.** The DISCOVER Codec: Architecture, Techniques And Evaluation. *PICTURE CODING SYMPOSIUM; 7-11-2007-9-11-2007; LISBON,* 07 November 2007, vol. 26